Europäisches Patentamt

(19) European Patent Office

Office européen des brevets

(11) EP 0 887 919 A2

(12) EUROPEAN PATENT APPLICATION

(43) Date of publication:
30.12.1998 Bulletin 1998/53

(51) Int. Cl.$^6$: H02P 8/36

(21) Application number: 98111864.9

(22) Date of filing: 26.06.1998

(84) Designated Contracting States:
AT BE CH CY DE DK ES FI FR GB GR IE IT LI LU
MC NL PT SE
Designated Extension States:
AL LT LV MK RO SI

(30) Priority: 26.06.1997 JP 170561/97
26.06.1997 JP 170564/97

(71) Applicant:
TOYOTA JIDOSHA KABUSHIKı KAISHA
Aichi-ken 471-8571 (JP)

(72) Inventor: Kizaki, Mikio
Toyota-shi, Aichi-ken, 471-8571 (JP)

(74) Representative:
Pellmann, Hans-Bernd, Dipl.-Ing. et al
Patentanwaltsbüro
Tiedtke-Bühling-Kinne & Partner
Bavariaring 4
80336 München (DE)

(54) Step motor controller

(57) A step motor controller is disclosed, in which in order to control the rotor accurately according to the degree of a step-out, if any, of a step motor (26), the step motor (26) is driven in accordance with a control signal generated based on the present position and a target position, the difference between the true position associated with the actual position of the step motor (26) and the present position thereof is detected, and the control signal is corrected in accordance with the difference. Further, in the case where the step motor (26) used for driving an intake throttle valve (25) of an internal combustion engine (11) steps out, the internal combustion engine can be driven without emitting a smoke, and the criteria for judging a step-out can be changed in accordance with whether the step-out is to an opening side or a closing side. For this purpose, upon detection of a step-out of at least a predetermined degree, the step motor (26) is controlled to a predetermined high opening position. The step motor (26) is judged to have stepped out, in the case where the actual position is displaced to the opening side by at least a predetermined first value from a target position or in the case where the actual position is displaced to the closing side by at least a second predetermined value from a target position. The first predetermined value is set larger than the second predetermined value.

FIG. 1

**Description**

INCORPORATED BY REFERENCE

The disclosure of Japanese Patent Applications No. HEI 9-170561 filed on June 26, 1997, no. HEI 9-170564 filed on June 26, 1997 including the specification, drawings and abstract are incorporated herein by reference in their entirety.

BACKGROUND OF THE INVENTION

1. FIELD OF THE INVENTION

The present invention relates to a step motor controller, or more in particular to a step motor controller capable of correcting a control signal supplied to a step motor in the case where the particular step motor steps out. The invention further relates to a step motor controller used with an intake throttle valve controller of a diesel engine, in which an intake throttle valve of step motor type that has stepped out is forcibly controlled.

2. DESCRIPTION OF THE RELATED ART

A conventional technology of this kind is disclosed in Japanese Patent Application No. HEI 6-101551, which describes a method of initializing a step motor that has stepped out. Specifically, in the case where a variable indicating the actual position of a step motor and a variable indicating the position of the step motor recognized by a controller comes to fail to meet a predetermined relationship, the step motor is initialized for restoring the predetermined relationship of the variables.

In the method described in the above-mentioned publication, however, the stepped-out state continues until complete initialization, during which it is difficult to drive the step motor to the required position accurately. Especially, in the case where a step motor used with the intake throttle valve of a diesel engine steps out to a closing side, the intake air is reduced and the resultant increase in EGR (Exhaust Gas Recirculation) causes a smoke, a misfire, etc. and in the worst case, the engine may be stalled. In the case where the step-out is to an opening side, on the other hand, generation of NOx or deterioration of the intake sound may be the result.

The method described in the above-mentioned publication fails to take into account the number of times the step motor involved has stepped out and whether a particular step-out is to the closing or the opening side. In the method described in the above-mentioned publication, therefore, the process cannot be changed according to the number of times of step-out or according to whether a particular step-out is to the closing or the opening side.

Further, the Japanese Patent Publication HEI 7-12000 contains a description that the step motor that has stepped out stops being controlled for an intake throttle valve of step motor type. Specifically, the conventional intake throttle valve controller of step motor type stops being controlled in the case where the difference increases between an intake throttle valve open command output from the controller and the actual intake throttle valve opening. Nevertheless, the same publication fails to describe the degree of opening to which the intake throttle valve is set upon detection of a step-out of a step motor. Once the control operation is stopped for the step motor which has stepped out as described in the same publication, however, normal operation of the engine may become difficult.

The above-mentioned two conventional technologies control a step motor according to whether it has stepped out or not, and fail to take into account the degree of a step-out of the step motor, i.e. the number of times a step-out has occurred or the degree of a given step-out. Consequently, the step motor cannot be accurately controlled, and the operation of an internal combustion engine cannot be normally controlled with the intake throttle valve using such a step motor.

SUMMARY OF THE INVENTION

The present invention has been developed in order to solve the above-mentioned problems, and the object thereof is to provide an intake throttle valve controller of step motor type for a diesel engine, wherein the engine can be driven without emitting a smoke even in the case where the step motor used for driving the intake throttle valve steps out.

The above object is solved by combination of features of the independent claim. The dependent claims disclose further advantageous developments of the invention.

In order to achieve the above-mentioned object, there is provided a step motor controller comprising means for detecting the degree of step-out of a step motor based on the position of the step motor, and control means for applying a control signal to the step motor in accordance with the degree or number of times of step-out. Thus, the step motor, even if stepped out, can be driven with high accuracy by producing a control signal taking the degree of step-out into account, wherein the control signal for the step motor, if stepped out, is corrected taking the degree of step-out into account and the rotor is driven with high accuracy. Also, in accordance with whether the step-out is to the closing or the opening side, the criteria for judging a step-out are changed thereby to assure normal control of the operation of the internal combustion engine. Moreover, an erroneous correction can be prevented, when the correction is performend in accordance with the number of times a step out has occurred.

According to a first advantageous development of the invention, the means for detecting the degree of step-out is arranged to detect the difference between the present position and a desired position of the step motor, wherein the step motor controller further comprises means for correcting the control signal in accordance with the difference. Preferably, the difference between the true position where the step motor is actually located and the present position of the rotor recognised by an ECU is detected and a target step representing a control signal can be corrected in accordance with the difference, so that the step motor, even if stepped out, can be controlled accurately.

According to a second advantageous development of the invention, there is provided a step motor controller further comprising counting means for counting the number of times the difference exceeds a predetermined value, wherein the correction means is arranged to correct the control signal in accordance with the difference in the case where the number of times the difference exceeds the predetermined value is more than a predetermined value. Preferably, the number of times the difference between the true position of the step motor and the present position thereof recognised by an ECU exceeds a predetermined value is counted, and wherein in the case where the last number of times exceeds a predetermined level, the target step can be corrected to thereby prevent an erroneous correction of the target step.

According to a third advantageous development of the invention, there is provided a step motor controller for driving an intake throttle valve of an internal combustion engine, wherein the correction means is arranged to correct a control signal only when the intake throttle valve steps out to a closing side. Thus, a target step can be corrected to shift the intake throttle valve to an opening side only when the step motor steps out to the closing side, thereby making it possible to prevent the adverse effect which otherwise might be caused by an erroneous correction of the intake throttle valve to the closing side.

According to a fourth advantageous development of the invention, there is provided a step motor controller for driving an intake throttle valve of an internal combustion engine, wherein the intake throttle valve is controlled to a predetermined high opening position upon detection of a step-out exceeding a predetermined degree. Thereby, it is possible to drive the internal combustion engine without emitting a smoke.

According to a fifth advantageous development of the invention, there is provided a step motor controller, wherein a step-out of a step motor is detected when the actual position of the intake throttle valve is displaced by at least a first predetermined value to an opening side from a target position or when the actual position of the intake throttle valve is displaced by at least a second predetermined value to a closing side from a target position, the first predetermined value being larger than the second predetermined value. As a result, a step-out of the step motor can be detected and a reference value of step-out to closing side can be reduced when the actual position of the intake throttle valve is displaced by at least a predetermined first value to the opening side from a target position and when the actual position of the intake throttle valve of the step motor is displaced by at least a second predetermined value smaller than the first predetermined value to the closing side from the target position, thereby making it possible to detect earlier a step-out to the closing side which causes a smoke.

This summary of the invention does not necessarily describe all necessary features so that the invention may also reside in a sub-combination of these described features.

BRIEF DESCRIPTION OF THE DRAWINGS

Further objects, features and advantages of the present invention will become apparent from the following description of preferred embodiments with reference to the accompanying drawings, wherein:

Fig. 1 is a diagram schematically showing a configuration of a diesel engine using an intake throttle valve of step motor type using the present invention. Fig. 2 is a block diagram showing the inside of an ECU 39 and input/output signals.

Fig. 3 is a flowchart and a two-dimensional map of a program for controlling the intake throttle valve of a diesel engine.

Fig. 4 is a flowchart of a program for controlling the intake throttle valve of a diesel engine.

Fig. 5 is a flowchart of a program for controlling an EGR and a graph showing the relation between the parameters used in the steps of the program.

Fig. 6 is a diagram for explaining a step-out of a step motor 26.

Fig. 7 is a flowchart of a program used by an intake throttle valve of step motor type of a diesel engine using the invention.

Fig. 8 is a flowchart of a program for correcting a target opening used by an intake throttle valve of step motor type of a diesel engine using the invention.

Fig. 9 is a flowchart of another program used by an intake throttle valve of step motor type of a diesel engine using the invention.

## DESCRIPTION OF THE PREFERRED EMBODIMENT

An embodiment of the present invention will be described with reference to the drawings.

In the present specification, the "on" and "off" states of a flag correspond to binary numbers of "1" (true) and "0" (false), respectively. The "on" and "off" states of a switch, on the other hand, correspond to a conductive stage and a non-conductive state, respectively, of the switch.

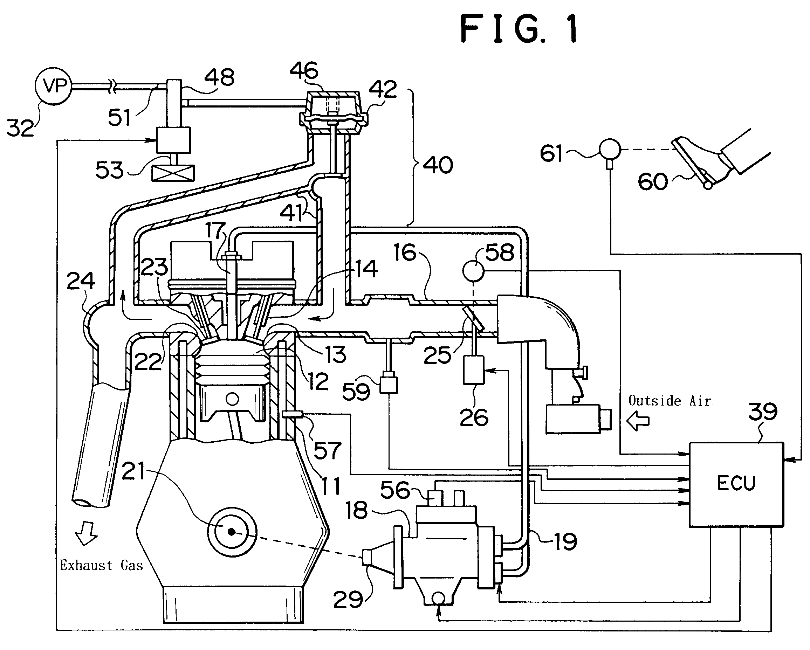

Fig. 1 is a diagram schematically showing a configuration of a diesel engine using an intake throttle valve of step motor type according to the invention. The description that follows refers to an application of a controller according to the invention to the intake throttle valve of a diesel engine. The invention, however, is not limited to such an application.

A diesel engine (hereinafter referred to as "the engine") 11 includes a plurality of cylinders each having a combustion chamber 12. In the intake stroke of the engine 11, an intake valve 14 opens an intake port 13 thereby to allow an external air (suction air) in the combustion chamber 12 to be sucked into an intake passage 16. A fuel injection pump 18 supplies the fuel to a fuel injection nozzle 17 under pressure through a fuel line 19. The fuel injection nozzle 17 injects the fuel into the combustion chamber 12. In the exhaust stroke of the engine 11, an exhaust valve 23 emits an exhaust gas through an exhaust passage 24 by opening an exhaust port 22.

A step motor 26 drives an intake throttle valve 25 to a desired value of opening in response to a control signal from an electronic control unit (hereinafter referred to as "the ECU") 39. A full-open switch 58 turns on when the intake throttle valve 25 is full open and turns off otherwise.

An EGR (exhaust gas recirculation) device 40 recirculates part of the exhaust gas emitted from the combustion chamber 12 to the exhaust passage 24, into the intake passage 16 and returns it to the combustion chamber 12. The EGR device 40 includes an EGR passage 41 for supplying part of the exhaust gas to the intake passage 16 from the exhaust passage 24 and an EGR valve 42 for regulating the amount of the exhaust gas (EGR amount) flowing in the EGR passage 41.

The EGR valve 42 is a diaphragm valve for opening/closing the EGR passage 41 using a negative pressure and the atmospheric pressure as a working pressure. The EGR device 40 includes an electric vacuum regulating valve (EVRV) 48 for regulating the negative pressure and the atmospheric pressure introduced into a pressure chamber 46. The EVRV 48 is connected to a negative pressure port 51, which is in turn connected to a pump 32, and to an atmospheric pressure port 53 for introducing the atmospheric air thereby to regulate the magnitude of the negative pressure supplied to the pressure chamber 46. The current flowing in the EVRV 48 is controlled by the ECU 39. The ECU 39 controls the EVRV 48 in accordance with the operating condition of the engine 11 and thus regulates the opening of the EGR valve 42 thereby to continuously adjust the EGR amount.

A crankshaft 21 of the engine 11 rotates a drive shaft 29 of the injection pump 18. A rotational speed sensor 56 arranged on the injection pump 18 detects the rotational speed of the drive shaft 29 thereby to detect the rotational speed of the crankshaft 21, i.e. the engine revolution NE.

A coolant temperature sensor 57 arranged in the engine 11 detects the temperature THW of the coolant for cooling the engine 11 and outputs an electrical signal corresponding to the coolant temperature THW to the ECU 39. An intake pressure sensor 59 arranged on the intake passage 16 detects the intake pressure PM in the intake passage 16 and outputs an electrical signal corresponding to the intake pressure PM to the ECU 39. An acceleration sensor 61 arranged in the vicinity of an accelerator pedal 60 outputs an electrical signal representing the acceleration point ACCP corresponding to the actuation amount of the accelerator pedal to the ECU 39.

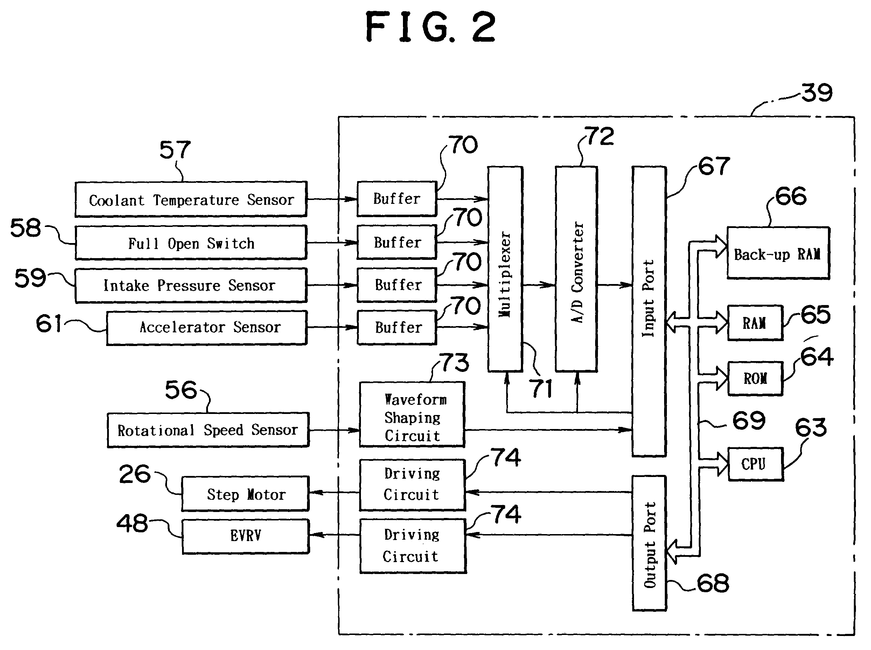

Fig. 2 is a block diagram showing the inside of the ECU 39 and input/output signals. The ECU 39 has typically composed of a central processing unit (CPU) 63, a read-only memory (ROM) 64, a random access memory (RAM) 65, a back-up RAM 66, an input port 67, an output port 68, an internal bus 69, a buffer 70, a multiplexer 71, an A/D converter 72, a waveform shaping circuit 73 and a drive circuit 74. The electrical signals output from the sensors 57 to 59, 61 are converted into digital signals by the A/D converter 72 through the buffer 70 and the multiplexer 71 and applied to the input port 67. The electrical signal output from the sensor 56, on the other hand, is shaped in waveform by the waveform shaping circuit 73 and applied to the input port 67. The electrical signals for driving the step motor 26 and the EVRV 48 are applied through the output port 68 to the drive circuit 74, and after being amplified as required for driving operation, output to the step motor 26 and the EVRV 48. The input port 67 and the output port 68 are connected through the internal bus 69 to the CPU 63, the ROM 64, the RAM 65 and the back-up RAM 66. The control program stored in the ROM 64, for example, arithmetically processes the parameters represented by the electrical signals applied to the ECU 39 and thus controls the intake throttle valve and the EGR of the diesel engine.

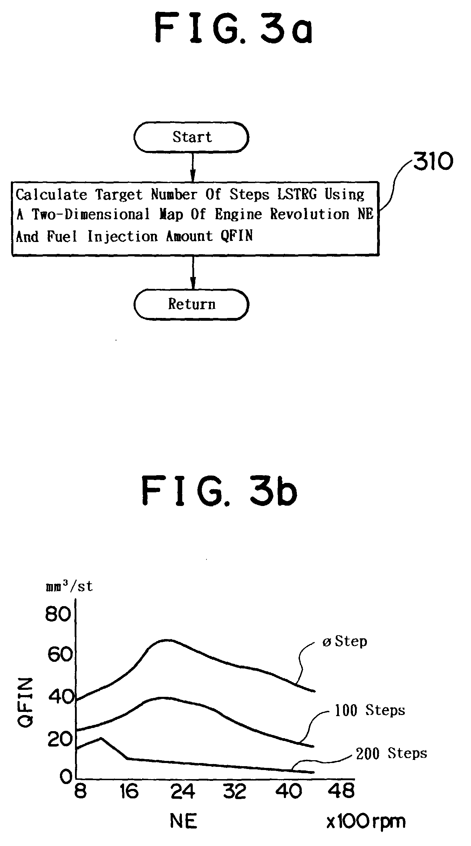

Now, an example operation of controlling the intake throttle valve and the EGR of the diesel engine will be briefly explained with reference to Figs. 3 to 5.

4

Fig. 3a is a flowchart of a program for controlling the intake throttle valve of the diesel engine, and Fig. 3b is a two-dimensional map used in step 310. The program shown in Fig. 3 is executed, for example, once per 8 ms.

In step 310, a target step LSTRG which is a target opening of the intake throttle valve of the diesel engine is calculated from an engine revolution NE and a fuel injection amount QFIN using the two-dimensional map of Fig. 3b. In this two-dimensional map, the abscissa represents the engine revolution NE, and the ordinate represents the fuel injection amount QFIN. The target step LSTRG at a point on a two-dimensional plane (NE, QFIN) is set to assume a value in the range of, say, 0 to 230 steps. In the two-dimensional map of Fig. 3b, only 0, 100 and 200 steps are plotted for simplicity's sake. Actual target steps LSTRG, however, assume continuous natural numbers. The unit $mm^3$/st in which the graph is plotted indicates the amount of fuel injected per stroke of the piston.

The step motor 26 is controlled by the program executed by the ECU 39 in such a manner that an actual step LSACT coincides with the target step LSTRG. The target step LSTRG is given as a natural number which assumes zero, for example, when the intake throttle valve 25 is full open, and progressively increases according as the intake throttle valve 25 goes on to close.

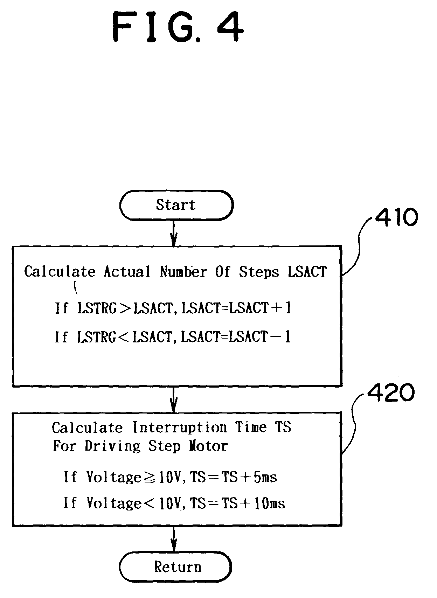

Fig. 4 is a flowchart of a program for controlling the intake throttle valve of the diesel engine. The program of Fig. 4 is executed at predetermined intervals of interruption. In step 410, the actual step LSACT recognized by the ECU 39 is calculated. If the target step LSTRG is larger than the actual step LSACT, the actual step LSACT is replaced by the present actual step LSACT plus 1. If the target step LSTRG is smaller than the actual step LSACT, on the other hand, the actual step LSACT is replaced by the present actual step LSACT minus 1.

In step 420, the time of interruption for executing the program of Fig. 4 is calculated in the following described manner. Specifically, in the case where the source voltage is not lower than 10 V, a time TS is replaced by a time TS plus 5 ms. If the source voltage is lower than 10 V, on the other hand, the time TS is replaced by a time TS plus 10 ms. When the source voltage is low, therefore, each interrupt is made at longer intervals of time.

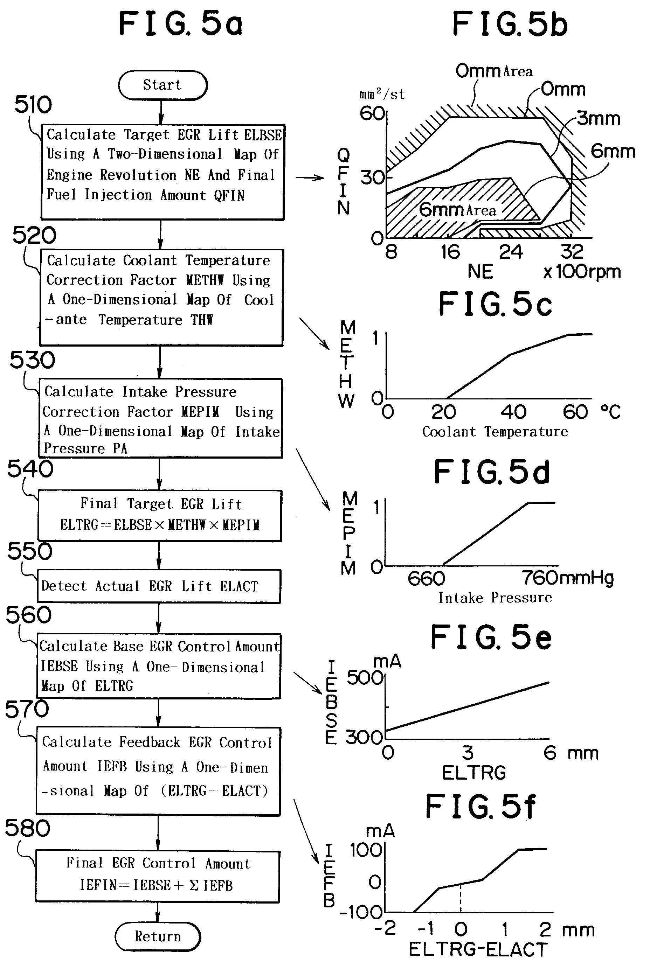

Fig. 5a is a flowchart of a program for controlling the EGR, and Figs. 5b to 5f are graphs showing the relation between the parameters used in the steps of Fig. 5a. The program of Fig. 5a is executed, for example, once per 8 ms.

In step 510, a base target EGR lift ELBSE providing a reference of the EGR lift is calculated from the engine revolution NE and the fuel injection amount QFIN using the two-dimensional map shown in Fig. 5b. In this two-dimensional map, the abscissa represents the engine revolution NE and the ordinate the fuel injection amount QFIN. The base target EGR lift ELBSE at a given point (NE, QFIN) on a two-dimensional plane is set to assume a value in the range of, say, 0 mm to 6 mm. In the two-dimensional map of Fig. 5, the target EGR lift ELBSE assumes continuous values between 0 mm and 6 mm. The engine revolution NE is obtained from the electrical signal output from the rotational speed sensor 56. The fuel injection amount QFIN is determined from the following equation, for example:

$$QFIN = min(f \text{ (engine revolution, accelerator pedal}$$
$$\text{actuation amount}), g \text{ (engine revolution, intake air pressure, intake air temperature)})$$

where "min" is a function of arguments, whichever is smaller, and "f" and "g" are functions stored in the ROM of the ECU.

In step 520, a coolant temperature correction factor METHW is calculated from a coolant temperature THW using the one-dimensional map shown in Fig. 5c. In this one-dimensional map, the abscissa represents the coolant temperature THW, and the ordinate the coolant temperature correction factor METHW. The map is set in such a manner that the coolant temperature correction factor METHW at a given coolant temperature THW assumes a value in the range of 0 to 1, for example. The coolant temperature THW is obtained from the electrical signal output from the coolant temperature sensor 57.

In step 530, an intake air pressure correction factor MEPIM is calculated from an intake air pressure PA using the one-dimensional map shown in Fig. 5d. In this one-dimensional map, the abscissa represents the intake air pressure PA, and the ordinate the intake air pressure correction factor MEPIM. The intake air pressure correction factor MEPIM for a given intake air pressure PA is set to assume a value in the range of 0 to 1, for example. The intake air pressure PA is obtained from the electrical signal output from the intake air pressure sensor 59.

In step 540, a final target EGR lift ELTRG is calculated using the base target EGR lift ELBSE, the coolant temperature correction factor METHW and the intake air pressure correction factor MEPIM, from the equation ELTRG = ELBSE x METHW x MEPIM.

In step 550, an actual EGR lift ELACT corresponding to the actual lift is detected by use of a sensor (EGR valve lift sensor) for detecting the actual lift of the EGR valve.

In step 560, a base EGR control amount IEBSE is calculated from the final target EGR lift ELTRG using the one-dimensional map shown in Fig. 5e. In this one-dimensional map, the abscissa represents the final target EGR lift ELTRG, and the ordinate the base EGR control amount IEBSE. The map is set in such a manner that the base EGR control amount IEBSE for a given final target EGR lift ELTRG assumes a value in the range of about 300 mA to about 500 mA, for example.

In step 570, a feedback EGR control amount IEFB is calculated from the difference between the final target EGR lift ELTRG and the actual EGR lift ELACT using the one-dimensional map of Fig. 5f. In this one-dimensional map, the abscissa represents the difference between the final target EGR lift ELTRG and the actual EGR lift ELACT, and the ordinate the feedback EGR control amount IEFB. The map is set in such a manner that the feedback EGR control amount IEFB for a given value of the difference between the final target EGR lift ELTRG and the actual EGR lift ELACT assumes a value in the range of, say, about - 100mA to about 100 mA. In step 580, a final EGR control amount IEFIN is calculated using the base EGR control amount IEBSE and the feedback EGR control amount IEFB from the equation IEFIN = IEBSE + $\Sigma$ IEFB. The ECU 39 controls the current corresponding to the final EGR control amount IEFIN to flow in the EVRV 48.

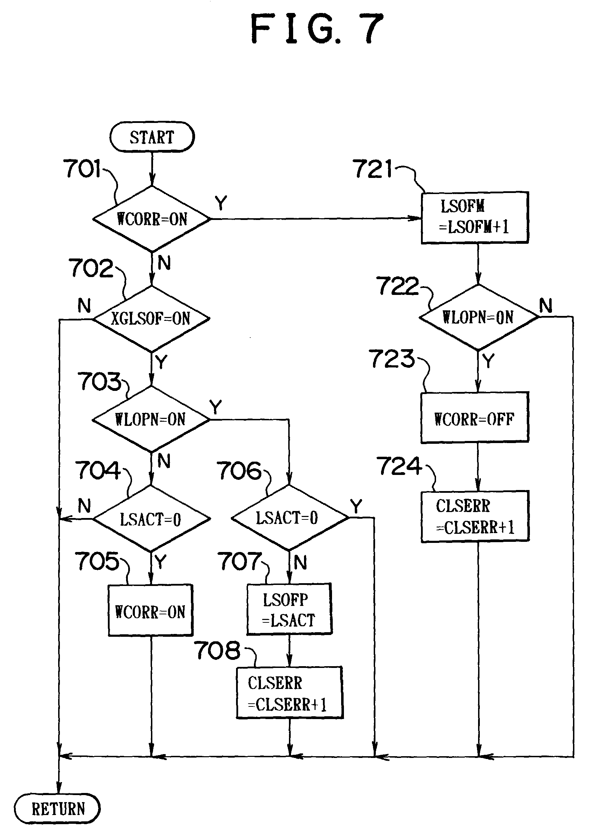

Now, an explanation will be given of a method for detecting the difference caused by a step-out between the "actual opening step LSACT" recognized by the ECU 39 and a "true opening step LSTRUE" corresponding to the actual rotor position. This difference detection is used in the program described later with reference to Fig. 7.

The actual opening step LSACT used in the program described later is an integer representing the present step position of the rotor of the step motor 26 and typically stored in the RAM 65 of the ECU 39. The actual opening step LSACT, therefore, can be considered to represent the present position of the rotor "recognized" by the ECU 39. The actual opening step LSACT, which is an integer indicating the rotor position expressed in steps of the step motor, assumes zero when the intake throttle valve 25 is full open and progressively increases according as the intake throttle valve 25 goes on to close. The value "1" of the actual opening step LSACT corresponds to the rotor angle of 0.3°, for example, for the step motor 26.

Now, let us define a virtual true opening step LSTRUE. The true opening step LSTRUE is given as an integer indicating the true step position associated with the actual position of the rotor of the step motor 26. The actual absolute position of the rotor of the step motor 26 can be normally determined only when the intake throttle valve 25 is open full or closed up. The value of the true opening step LSTRUE, therefore, is not always directly held in the ECU 39. The true opening step LSTRUE, which, like the actual opening step LSACT, is given as an integer indicating the rotor position expressed in steps of the step motor 26, assumes zero when the intake throttle valve 25 is full open and progressively increases according as the intake throttle valve 25 goes on to close. Unless the step motor 26 steps out, the actual opening step LSACAT indicating the present rotor position recognized by the ECU 39 is equal to the true opening step LSTRUE indicating the true step position of the rotor. As long as the step motor 26 steps out, however, the actual opening step LSACT indicating the position recognized by the ECU 39 is equal to the true opening step LSTRUE indicating the true position.

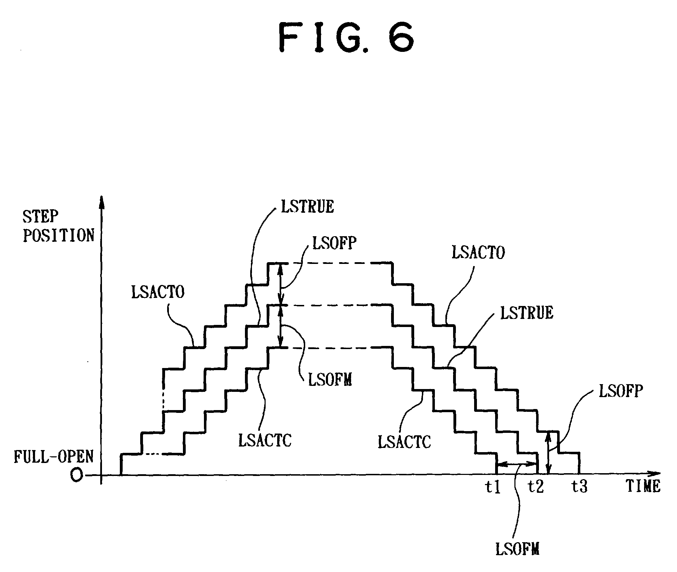

Fig. 6 is a diagram for explaining a step-out of the step motor 26. In the graph of Fig. 6, the abscissa represents the time, and the ordinate the step position. In Fig. 6, the curve of the true opening step LSTRUE represents the change in the true step position held associated with the actual rotor position, the curve of an actual opening step LSACTO the change in the step position held by the ECU when the step motor 26 steps out to the opening side, and the curve of an actual opening step LSACTC represents the change in the step position held by the ECU when the step motor 26 steps out to the closing side. The expression "the step motor steps out to the opening side" indicates the state in which the true step position associated with the actual rotor position is such that the intake throttle valve 25 is opened wider than at the step position of the rotor recognized by the ECU 39. Also, "the step motor steps out to the closing side" indicates the state in which the true step position associated with the actual rotor position is such that the intake throttle valve 25 is closed to a greater degree than at the step position of the rotor recognized by the ECU 39. Consequently, the curve of the true opening step LSTRUE is located where the step position is smaller than the curve of the actual opening step LSACTO (i.e. on the lower side of the graph in Fig. 6). The curve of the true opening step LSTRUE, on the other hand, is located where the step position is larger than the curve of the actual opening step LSACTC (i.e. on the upper side of the graph in Fig. 6).

A method for determining the difference between the true opening step LSTRUE caused by a step-out, the actual opening step LSACTO and the actual opening step LSACTC will be explained with reference to Fig. 6. In Fig. 6, the rotor of the step motor 26 drives the intake throttle valve 25 from full open position to closing side, and then again to full open side. An opening side step-out LSOFP is the difference between the actual opening step LSACTO and the true opening step LSTRUE. In other words, the opening side step-out LSOFP indicates the amount by which the true step position of the rotor is displaced from the step position recognized by the ECU 39 as a result of an opening side step-out. A closing side step-out LSOFM, on the other hand, is the difference between the actual opening step LSACTC and the true opening step LSTRUE. In other words, the closing side step-out LSOFM is the amount by which the true step position of the rotor is displaced from the step position recognized by the ECU 39 as a result of a closing side step-out. The opening side step-out LSOFP and the closing side step-out LSOFM are both given as integers not negative and the value of "1" thereof corresponds to one step of the step motor.

The diesel engine to which the present invention is applicable comprises a full-open switch 58. The full-open switch 58 is turned on when the intake throttle valve 25 is in full-open position, and is turned off otherwise. The steps of determining the opening side step-out LSOFP in the process will be explained. The opening side step-out LSOFP shown in Fig. 6 covers two steps. Specifically, the actual rotor position is displaced by two steps to opening side from the rotor position recognized by the ECU 39. At time point t2 when the full-open switch 58 turns on (i.e. when the true opening step LSTRUE becomes zero), the actual opening step LSACTO is 2. As seen from Fig. 6, as long as the step motor 26 steps out to opening side, the actual opening step LSACTO associated with the on-state of the full-open switch 58 is equal to the opening side step-out LSOFP. In the case where the step motor 26 steps out to opening side, the full-open switch 58 turns on at time point t2 earlier than time point t3 when the ECU 39 recognizes that the rotor has reached the full-open position.

Now, an explanation will be given of the steps of determining the closing side step-out LSOFM. The closing side step-out LSOFM shown in Fig. 6 covers 2 steps. Specifically, the actual rotor position is displaced by two steps to closing side from the rotor position recognized by the ECU 39. At time point t1 when the actual opening step LSACTC becomes zero, the full-open switch 58 is in off state. As seen from Fig. 6, when the step motor 26 steps out to closing side, the actual opening step LSACTC is equal to zero. Therefore, the period before the full-open switch 58 turns on corresponds to the closing side step-out LSOFM, on the assumption that the step motor 26 is driven to opening side one step per unit time. In the case where the step motor 26 steps out to closing side, on the other hand, the full-open switch 58 turns on at time point t2 later than time point t1 when the ECU 39 recognizes that the rotor has reached the full-open position.

Fig. 7 is a flowchart of a program used by the intake throttle valve of step motor type for the diesel engine according to the invention. The program of Fig. 7 is executed once every 8 ms, for example. Specifically, the control operation at regular intervals according to the program is initiated at "start" and terminated at "return" in Fig. 7 at regular time intervals. Once the control process moves to "return", the program is not executed until the control process moves to "start".

In step 701, it is determined whether a step-out is under correction, i.e. whether a flag WCORR indicating that the step-out is being corrected is "on" or not. In the case where the step-out is under correction (WCORR = ON), the process proceeds to step 721, while if the step-out is not being corrected (WCORR = OFF), the process proceeds to step 702.

In step 702, it is determined whether the full-open learning is over, i.e. whether a flag XGLSOF indicating the full-open learning is set. If the full-open learning is over (XGLSOF = ON), the process proceeds to step 703, while if the full-open learning is not over (XGLSOF = OFF), the control process moves to "returns".

In step 703, it is determined whether the intake throttle valve 25 is in full-open position, i.e. whether an output signal WLOPN of the full-open switch 5 is on. If the intake throttle valve 25 is in full-open position (WLOPN = ON), the process proceeds to step 706, while if the intake throttle valve 25 is not in full-open position (WLOPN = OFF), the process is passed to step 704 . The full-open switch 58 is coupled to the rotational shaft for driving the intake throttle valve 25 and the output signal WLOPN thereof turns on when the intake throttle valve 25 is full open and turns off otherwise. In other words, the output signal WLOPN of the full-open switch 58 indicates whether the intake throttle valve 25 is actually in full-open position.

In step 704, it is determined whether the position of the intake throttle valve 25 recognized by the ECU 39 is a full-open position or not, i.e. whether the actual opening step LSACT is equal to zero. The state where the actual step LSACT is zero corresponds to the state where the intake throttle valve 25 is full open. In the case where the position of the intake throttle valve 25 recognized by the ECU 39 is the full-open position (LSACT = 0), the process proceeds to step 705. Under this condition, the step motor steps out to closing side. This is by reason of the fact that although the intake throttle valve 25 is not actually full open, the ECU 39 already recognizes that "the full-open position has been reached", and the true stop position associated with the actual rotor position is such that the intake throttle valve is closed more than at the step position of the rotor recognized by the ECU 39. In the case where the position of the intake throttle valve 25 recognized by the ECU 39 is not the full-open position (LSACT is not zero), however, the step motor has not stepped out, and therefore the control process moves to "return".

In step 705, the flag WCORR indicating that the step-out is under correction is turned on and the control moves to "return".

In step 706, it is determined whether the position of the intake throttle valve 25 recognized by the ECU 39 is the full-open position, i.e. whether the actual opening step LSACT is equal to zero or not. If the position of the intake throttle valve 25 recognized by the ECU 39 is the full-open position (LSACT = 0), it indicates that the step motor has not stepped out, and therefore the control moves to "return". If the position of the intake throttle valve 25 recognized by the ECU 39 is not the full-open position (LSACT is not zero), on the other hand, the process proceeds to step 707. Under this condition, the step motor steps out to opening side. This is by reason of the fact that although the intake throttle valve 25 is actually full open, the ECU 39 recognizes that "the full-open position has not been reached", and the true step position associated with the actual rotor position is such that the intake throttle valve is opened to a greater degree than at the step position of the rotor recognized by the ECU 39.

In step 707, the value of the actual opening step LSACT is substituted into the opening side step-out LSOFP.

In step 708, an error counter CLSERR indicating the number of times the step-out occurred is incremented by one,

7

and the control moves to "return". The error counter CLSERR is for counting the number the step motor has stepped out since its manufacture and initially assumes zero. The value on the error counter CLSERR is held by a RAM or the like backed up by a battery, for example, in order not to be cleared even when the ignition switch is turned off.

In step 721, the closing side step-out LSOFM is incremented by one. The closing side step-out LSOFM assumes zero in the initialized state.

In step 722, it is determined whether the intake throttle valve 25 is in full-open position, i.e. whether the output signal WLOPN of the full-open switch 58 is on or not. If the intake throttle valve 25 is in full-open position (WLOPN = ON), the process proceeds to step 723, while if the intake throttle valve 25 is not in full-open position (WLOPN = OFF), on the other hand, the control moves to "return".

In step 723, the intake throttle valve 25 is actually full open. Therefore, the closing side step-out LSOFM assumes a value accumulated by driving the step motor one by one to opening side from the time of the closing-side step-out judgment in step 705 to the time when the intake throttle valve 25 actually opens full. The closing side step-out LSOFM is calculated in step 723, and therefore the flag WCORR indicating that the step-out is under correction is turned off.

In step 724, the error counter CLSERR indicating the number of times the step-out has occurred is incremented by one, and then the control moves to "return".

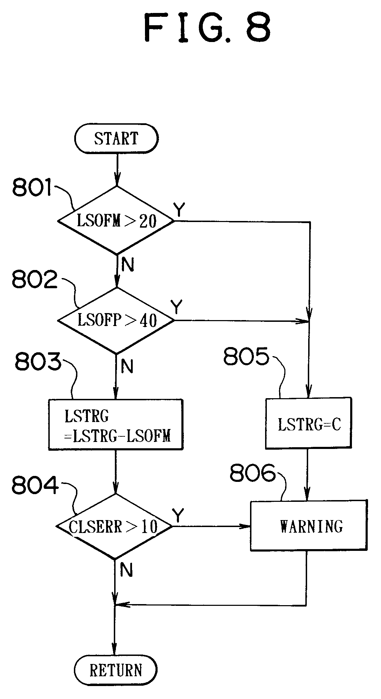

Fig. 8 is a flowchart of a target opening correction program used by the intake throttle valve of step motor type for the diesel engine using the invention. The program of Fig. 8 is also executed once every 8 ms, for example.

In step 801, it is determined whether the closing side step-out LSOFM is larger than 20. If the closing side step-out LSOFM is larger than 20, the process proceeds to step 805, while if the closing side step-out LSOFM is not larger than 20, on the other hand, the process is passed to step 802.

In step 802, it is determined whether the opening side step-out LSOFP is larger than 40 or not. If the opening side step-out LSOFP is larger than 40, the process proceeds to step 805, while if the opening side step-out LSOFP is not larger than 40, on the other hand, the process proceeds to step 803.

The threshold level (value 40) used for judgment in step 802 is larger than the threshold level (value 20) used for judgment in step 801. In other words, the judgment of the opening side step-out in step 802 is set more loosely than the judgment of the closing side step-out in step 801. More specifically, the sensitivity of judgment of the opening side step-out in step 802 is lower than that of the closing side step-out in step 801. In the case where an opening side step-out is detected, therefore, the step-out control (the control for driving the intake throttle valve forcibly to a predetermined position, for example) can be held without being executed to a point nearer to an operation limit than in the case where a closing side step-out is detected. As a result, according to the invention, the engine can be driven to an operation limit.

The reason why the threshold level (value 40) in step 802 is set larger than the threshold level (value 20) in step 801 is because a smoke is generated by a closing side step-out but not by an opening side step-out in driving the intake throttle valve of the diesel engine. Specifically, judgment that the step motor 26 has stepped out to opening side can be postponed until actually required by setting the criteria for judgment of the opening side step-out more loosely than that of the closing side step-out.

In step 803, the target step LSTRG is corrected to opening side. Specifically, the target step LSTRG is replaced by the value thereof less the closing side step-out LSOFM (LSTRG - LSOFM). In other words, in step 803, the target step LSTRG is corrected by subtracting the closing side step-out LSOFM from it, i.e. by shifting the intake throttle valve 25 to opening side by an anticipated amount LSOFM of step-out to closing side from the target step LSTRG. This correction based on the closing side step-out LSOFM is what is called an "anticipated correction" which presupposes that the step motor 26 may step out by LSOFM also the next time. However, an erroneous correction of a target step to closing side has a larger adverse effect. In other words, an erroneous correction to opening side has a lesser adverse effect than an erroneous correction to closing side. This is due to the fact that the failure to secure at least a predetermined amount of intake air for a given fuel amount in a diesel engine leads to the problem of a misfire or an engine stall caused by a smoke or a combustion failure.

In step 803, therefore, the target step LSTRG is corrected taking only the closing side step-out LSOFM into account. As a result, the target step LSTRG is corrected by shifting to safe side, i.e. to opening side. According to the present invention, therefore, the problem of smoke or the like can be avoided which otherwise might be caused by erroneous correction to closing side.

In step 804, it is determined whether the count on the error counter CLSERR is larger than 10. If the count on the error counter CLSERR is larger than 10, the process proceeds to step 806, while if the count on the error counter CLSERR is not larger than 10, the control process moves to "return".

In step 805, the target step LSTRG is set to a predetermined value thereby to drive the intake throttle valve 25 forcibly to a predetermined high opening position. For example, the intake throttle valve 25 can be driven to full-open position by setting the target step LSTRG to zero. As a result, when the step-out is larger than a predetermined value, the intake throttle valve 25 can be driven forcibly to a predetermined position without being controlled.

The significance of the intake throttle valve 25 capable of being forcibly driven in step 805 will be explained. As long as at least a predetermined intake air amount is secured as compared with the fuel amount, the diesel engine, due to its characteristics, can be operated with an engine torque determined by the fuel injection amount without generating a smoke. Once the step motor is controlled according to a program including step 805, therefore, the intake throttle valve can be driven to a predetermined high opening position in case of step-out. Thus, the engine can be operated without emitting any smoke when the step motor steps out.

After warning the driver in step 806, the control process moves to "return".

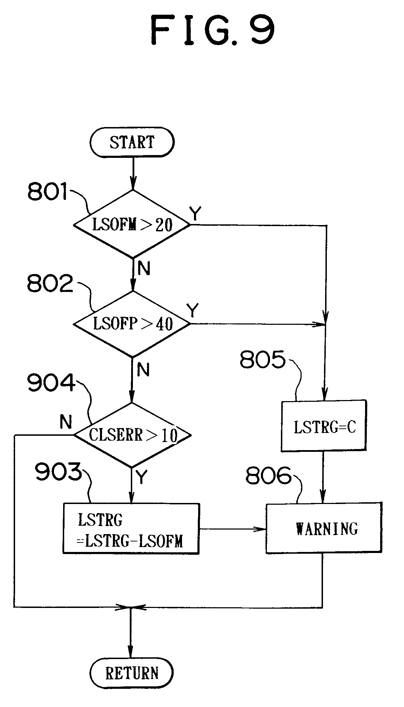

Fig. 9 is a flowchart of another program used by the intake throttle valve of step motor type for a diesel engine according to the invention. The program of Fig. 9 is different from that of Fig. 8 in that steps 903 and 904 are in reverse order to steps 803 and 804. As a result, the correction to opening side can be held without being executed until the step motor steps out more than a predetermined number of times. In other words, in Fig. 9, the correction to opening side is carried out only after the step motor steps out more than a predetermined number of times. The correction of the target step shown in the flowchart of Fig. 9 is based on the fact that the step motor which has stepped out more than a predetermined number of times is easily expected to step out frequently in the future. Specifically, step 904 judges whether the step motor has stepped out more than a predetermined number of times, and if the judgment is affirmative, the step motor is judged to have a high tendency to step out and an anticipated correction is executed. According to the embodiment of Fig. 9, the target step can be corrected after confirming that the step motor has a high tendency to step out. This embodiment, therefore, has the advantage that an erroneous correction of the target step can be avoided.

In the foregoing description, the predetermined value 20 or 40 used for judgment in steps 801 and 802, for example, can be changed depending on the object of control or the desired control characteristic.

The above-mentioned programs used by the intake throttle valve of step motor type of a diesel engine according to the invention is typically stored in the ROM 64 built in the ECU 39, but can alternatively be stored in other storage means with equal effect. The functions of these programs can be implemented also by a multi-purpose processor such as a CPU 63 programmed to give an instruction for executing a predetermined step, by a specific hardware element including a wired logic for executing a predetermined step, or by a combination of a programmed multi-purpose processor and a specific hardware.

A step motor controller according to the invention was explained above taking the intake throttle valve, or especially, the intake throttle valve of a diesel engine as an example. The objects to be driven by the step motor, however, are not limited to the intake throttle valve.

While the present invention has been described with reference to what is presently considered to be a preferred embodiment thereof, it is to be understood that the invention is not limited to the disclosed embodiment or construction. On the contrary, the invention is intended to cover various modifications and equivalent arrangements within the scope of the claims. A step motor controller is disclosed, in which in order to control the rotor accurately according to the degree of a step-out, if any, of a step motor (26), the step motor (26) is driven in accordance with a control signal generated based on the present position and a target position, the difference between the true position associated with the actual position of the step motor (26) and the present position thereof is detected, and the control signal is corrected in accordance with the difference. Further, in the case where the step motor (26) used for driving an intake throttle valve (25) of an internal combustion engine (11) steps out, the internal combustion engine can be driven without emitting a smoke, and the criteria for judging a step-out can be changed in accordance with whether the step-out is to an opening side or a closing side. For this purpose, upon detection of a step-out of at least a predetermined degree, the step motor (26) is controlled to a predetermined high opening position. The step motor (26) is judged to have stepped out, in the case where the actual position is displaced to the opening side by at least a predetermined first value from a target position or in the case where the actual position is displaced to the closing side by at least a second predetermined value from a target position. The first predetermined value is set larger than the second predetermined value.

A step motor controller is disclosed, in which in order to control the rotor accurately according to the degree of a step-out, if any, of a step motor (26), the step motor (26) is driven in accordance with a control signal generated based on the present position and a target position, the difference between the true position associated with the actual position of the step motor (26) and the present position thereof is detected, and the control signal is corrected in accordance with the difference. Further, in the case where the step motor (26) used for driving an intake throttle valve (25) of an internal combustion engine (11) steps out, the internal combustion engine can be driven without emitting a smoke, and the criteria for judging a step-out can be changed in accordance with whether the step-out is to an opening side or a closing side. For this purpose, upon detection of a step-out of at least a predetermined degree, the step motor (26) is controlled to a predetermined high opening position. The step motor (26) is judged to have stepped out, in the case where the actual position is displaced to the opening side by at least a predetermined first value from a target position or in the case where the actual position is displaced to the closing side by at least a second predetermined value from a target position. The first predetermined value is set larger than the second predetermined value.

## Claims

1.   A step motor controller comprising means (63) for detecting the degree of a step-out of a step motor (26) based on the position of said step motor (26), and control means (63) for applying a control signal to said step motor (26) in accordance with the degree or number of times of said step-out.

2.   A step motor controller according to claim 1, characterised in that the means (63) for detecting the degree of step-out detects the difference between the present position and a desired position of the step motor (26), said step motor controller further comprising means (63) for correcting the control signal in accordance with said difference.

3.   A step motor controller according to claim 2, characterised in that the step motor (26) is arranged to drive an intake throttle valve (25) of an internal combustion engine (11) and said correction means (63) is arranged to correct said control signal only in the case where the intake throttle valve (25) steps out to a closing side.

4.   A step motor controller according to claim 2, characterised in that counting means are provided for counting the number of times said difference exceeds a predetermined value, wherein said correction means (63) is arranged to correct said control signal in accordance with said difference in the case where said number of times of step-out exceeds a predetermined value.

5.   A step motor controller according to claim 4, characterised in that the step motor (26) is arranged to drive an intake throttle valve (25) of an internal combustion engine (11) and said correction means (63) is arranged to correct said control signal only in the case where said intake throttle valve (25) steps out to a closing side.

6.   A step motor controller according to claim 1, characterized in that the step motor (26) is arranged to drive an intake throttle valve (25)of an internal combustion engine (11), and upon detection of a step-out of not less than a predetermined degree, the intake throttle valve is controlled to a predetermined high opening position.

7.   A step motor controller according to claim 6, characterized in that a step-out of the step motor (26) is detected in the case where the actual position of the intake throttle valve (25) is displaced by at least a first predetermined value to an opening side with respect to a desired position or in the case where the actual position of the intake throttle valve (25) is displaced by at least a second predetermined value to a closing side with respect to the target position, said first predetermined value being set larger than said second predetermined value.

FIG. 1

# FIG. 2

**57** Coolant Temperature Sensor → **70** Buffer

**58** Full Open Switch → **70** Buffer

**59** Intake Pressure Sensor → **70** Buffer

**61** Accelerator Sensor → **70** Buffer

**71** **70** Multiplexer **72** A/D Converter **67** Input Port

**66** Back-up RAM

**65** RAM

**64** ROM

**69**

**63** CPU

**56** Rotational Speed Sensor → **73** Waveform Shaping Circuit

**26** Step Motor ← **74** Driving Circuit

**48** EVRV ← **74** Driving Circuit

**68** Output Port

**39**

EP 0 887 919 A2

# FIG. 3a

Start

Calculate Target Number Of Steps LSTRG Using A Two-Dimensional Map Of Engine Revolution NE And Fuel Injection Amount QFIN — 310

Return

# FIG. 3b

mm$^3$/st

QFIN

80
60
40
20
0

ø Step
100 Steps
200 Steps

8  16  24  32  40  48

NE                          x100 rpm

# FIG. 4

Start

Calculate Actual Number Of Steps LSACT

If LSTRG > LSACT, LSACT=LSACT + 1

If LSTRG < LSACT, LSACT=LSACT − 1

410

Calculate Interruption Time TS
For Driving Step Motor

If Voltage ≧ 10V, TS = TS + 5ms

If Voltage < 10V, TS = TS + 10ms

420

Return

# FIG.5a

**Start**

510 — Calculate Target EGR Lift ELBSE Using A Two-Dimensional Map Of Engine Revolution NE And Final Fuel Injection Amount QFIN

520 — Calculate Coolant Temperature Correction Factor METHW Using A One-Dimensional Map Of Cool-ante Temperature THW

530 — Calculate Intake Pressure Correction Factor MEPIM Using A One-Dimensional Map Of Intake Pressure PA

540 — Final Target EGR Lift
$$ELTRG = ELBSE \times METHW \times MEPIM$$

550 — Detect Actual EGR Lift ELACT

560 — Calculate Base EGR Control Amount IEBSE Using A One-Dimensional Map Of ELTRG

570 — Calculate Feedback EGR Control Amount IEFB Using A One-Dimen-sional Map Of (ELTRG−ELACT)

580 — Final EGR Control Amount
$$IEFIN = IEBSE + \Sigma IEFB$$

**Return**

# FIG.5b

$mm^2/st$

QFIN vs NE (x100rpm)

0mm Area, 0mm, 3mm, 6mm, 6mm Area

# FIG.5c

METHW vs Coolant Temperature (°C)

# FIG.5d

MEPIM vs Intake Pressure (mmHg)

# FIG.5e

IEBSE (mA) vs ELTRG (mm)

# FIG.5f

IEFB (mA) vs ELTRG−ELACT (mm)

FIG. 6

# FIG. 7

```
                    START
                      │
701 ─╮                ▼                              721 ─╮
     ╲          ╱───────────╲    Y                        ┌──────────────┐
      ╲────────< WCORR=ON    >──────────────────────────▶│    LSOFM     │
               ╲───────────╱                             │  =LSOFM+1    │
                      │ N                                └──────────────┘
702 ─╮                ▼                                          │
  N   ╱───────────╲                              722 ─╮         ▼
◀────< XGLSOF=ON   >                                  ╱───────────╲    N
      ╲───────────╱                                  < WLOPN=ON    >──────┐
                │ Y                                   ╲───────────╱       │
703 ─╮          ▼                              723 ─╮        │ Y          │
      ╱───────────╲    Y                             ┌──────────────┐     │
     < WLOPN=ON    >────────┐                        │ WCORR=OFF    │     │
      ╲───────────╱         │                        └──────────────┘     │
              │ N           │                 724 ─╮        │             │
704 ─╮        ▼             ▼                        ┌──────────────┐     │
  N   ╱───────────╲   706 ─╮╱───────────╲   Y       │   CLSERR     │     │
◀────<  LSACT=0    >       <  LSACT=0     >────┐    │  =CLSERR+1   │     │
      ╲───────────╱         ╲───────────╱      │    └──────────────┘     │
              │ Y           │ N                │           │             │
705 ─╮        ▼      707 ─╮  ▼                 │           │             │
  ┌──────────┐        ┌──────────┐            │           │             │
  │ WCORR=ON │        │  LSOFP   │            │           │             │
  └──────────┘        │ =LSACT   │            │           │             │
        │             └──────────┘            │           │             │
        │       708 ─╮      │                 │           │             │
        │        ┌──────────┐                 │           │             │
        │        │  CLSERR  │                 │           │             │
        │        │=CLSERR+1 │                 │           │             │
        │        └──────────┘                 │           │             │
        │             │                       │           │             │
  ◀─────┴─────────────┴───────────────────────┴───────────┴─────────────┘
  │
  ▼
RETURN
```

# FIG. 8

```
                    ┌─────────┐
                    │  START  │
                    └─────────┘
                         │
                         ▼
801 ─────          ╱╲
              ╱         ╲        Y
            ╱  LSOFM > 20  ╲──────────────────┐
              ╲         ╱                       │
                ╲     ╱                         │
                 ╲ ╱                            │
                  │ N                           │
                  ▼                             │
802 ─────          ╱╲                           │
              ╱         ╲        Y              │
            ╱  LSOFP > 40  ╲─────────────┐      │
              ╲         ╱                 ▼      │
                ╲     ╱                          │
                 ╲ ╱                             │
                  │ N                            │
                  ▼                              ▼
803 ─────   ┌──────────────┐         805 ─────  ┌─────────────┐
            │    LSTRG      │                    │   LSTRG=C   │
            │ =LSTRG-LSOFM  │                    │             │
            └──────────────┘                    └─────────────┘
                  │                                    │
                  ▼                        806 ─────   ▼
804 ─────      ╱╲                             ┌─────────────┐
          ╱         ╲        Y                │   WARNING   │
        ╱  CLSERR > 10  ╲─────────────────────│             │
          ╲         ╱                         └─────────────┘
            ╲     ╱                                  │
             ╲ ╱                                     │
              │ N                                    │
              ▼                                      │
              ◄──────────────────────────────────────┘
              │
              ▼
        ┌─────────┐
        │ RETURN  │
        └─────────┘
```

# FIG. 9

801 — LSOFM > 20 — Y

N

802 — LSOFP > 40 — Y

N

904 — N — CLSERR > 10

Y

903 — LSTRG = LSTRG-LSOFM

805 — LSTRG=C

806 — WARNING

START

RETURN